# EUROPEAN PATENT APPLICATION

(11) **EP 4 826 920 A1**
(43) Date of publication of application: **21.10.2026**
(21) Application number: 25171492.9
(22) Date of filing: 18.04.2025
(51) Int. Cl.: H01R 13/639, H01R 13/641, H01R 13/53

(54) **CONNECTOR ASSEMBLY**

(71) Applicant: Aptiv Technologies AG, 8200 Schaffhausen (CH)
(72) Inventor: MORIN, Laurent, 78120 Rambouillet (FR); PORTIER, Vincent, 28110 LUCE (FR); MANNE, Rama Krishna, 522257 GUNTUR (IN); RAMESH, Ashwin Babu, 670105 Kannur (IN)
(74) Representative: INNOV-GROUP

(57) **Abstract**

The connector assembly comprises two side latches (63) arranged along respective side walls (28) of a connector, each side latch comprising :
- a protuberance (70) arrange on a header connector,
- an edge (72) arranged on the side wall (28) of the connector, in a connected state this edge being located after the protuberance in a connection direction, and
- a side arm (74) provided in a CPA (60), this side arm being shaped :
- to be wedged between the protuberance (70) and the edge (72) when the CPA is in a pull-in position to lock the connector side wall relative to the header connector, and
- not to be wedged between the protuberance (70) and the edge (72) when the CPA is in a pull-back position to unlock the connector side wall relative to the header connector.

## Description

The invention concerns a connector assembly and a vehicle equipped with this connector assembly.

The applicant knows of connector assemblies comprising a header connector and a connector reversibly movable between a disconnected state and a connected state. In the connected state, the header connector and the connector are mechanically and electrically connected to each other to electrically interconnect vehicle electrical equipments.

Such connector assemblies are crossed by high currents, i.e. currents in excess of 50 A and, more often, in excess of 100 A or 500 A. Under these conditions, it is important to prevent any accidental movement of such a connector assembly towards its disconnected state. To this end, the connector assemblies are equipped with a locking mechanism reversibly movable between a locked position and an unlocked position. In the lock position, the locking mechanism holds the header connector and connector in the connected state. In the unlocked position, the header connector and connector can be freely moved into the disconnected state. This locking mechanism can be moved manually from the locked position to the unlocked position. To this end, the locking mechanism comprises a front hook in a front wall of the header connector and a corresponding front stop in a front wall of the connector. In the locked position, the front hook is engaged with the front stop to prevent the head connector and the connector from moving to the disconnected state.

To prevent accidental movement into the disconnected state, these connector assemblies additionally comprise an element known as Connector Position Assurance (CPA). The CPA can be moved manually between a pull-back position and a pull-in position. In the pull-back position, a user can access the front hook of the locking mechanism to move it into its unlocked position. Conversely, in the pull-in position, the user cannot access the front hook.

In the case of certain connector assemblies, the front hook can only be positioned on the front wall side of this connector assembly. This is the case, for example, with connector assemblies in which the connector is a 90° connector. A 90° connector is one in which the end of the electrical cable enters the connector through the rear wall of the connector, i.e. the wall opposite the front wall of the connector. In such a situation, the cable end extends substantially perpendicular to the insertion direction, i.e. the direction in which the connector is moved to fit into the header connector. Because of this position of the cable, it is not possible to provide a rear hook on the rear wall side of the connector, as access to such a rear hook is then made difficult by the presence of the cable on this rear wall. Typically, such a rear hook would be located under the cable at a point that is difficult for the user's fingers to reach.

For such connector assemblies in which the hook of the locking mechanism is only located on the front wall side of the connector, the applicant noted that if the user pulls the cable upwards, the connector may pivot forward about an axis located approximately at the level of the foot of the front wall of this connector while the locking mechanism remains in its locked position. Such forward pivoting of the connector while the locking mechanism is in its locked position can cause problems.

For example, if the connector assembly is additionally equipped with electrical terminals that ensure the electrical continuity of a High Voltage Interlock Loop (HVIL), then this may cause the interlock loop to break while the connector assembly is still in its connected state. This is particularly the case if these electrical terminals are located close to the rear wall of the connector, that is close to the location where the amplitude of the connector's displacement relative to the header connector is at its maximum when the connector pivots forward.

The invention aims to remedy this drawback by providing a connector assembly in which such forward pivoting of the connector relative to the header connector is reduced or eliminated without complicating the use of this connector assembly.

The invention is set out in the attached set of claims.

The invention will be better understood on reading the following description, given solely by way of non-limiting example and made with reference to the drawings on which :
- Figure 1 is a schematic illustration of the architecture of a vehicle equipped with a connector assembly,
- Figure 2 is a side view of the connector assembly of the vehicle of Fig. 1,
- Figure 3 is a perspective view of the connector assembly of Fig. 2,
- Figure 4 is a top view of the connector assembly of Fig. 2,
- Figure 5 is a partial longitudinal cross-section view of the connector assembly of Fig. 2,
- Figure 6 is a partial longitudinal cross-section view of HVIL terminals of the connector assembly of Fig. 2,
- Figure 7 is a perspective view of a CPA of the connector assembly of Fig. 2,
- Figure 8 is a partial perspective view of a longitudinal cross-section of a side latch of the connector assembly of Fig. 2,
- Figure 9 is a partial longitudinal cross-section view of the side latch of Fig. 8, and
- Figure 10 is a partial perspective view of an extremity of a side arm of the CPA of Fig. 7.

In this description, the terminology, conventions and definitions of the terms used in this text are introduced in Chapter I. Then, a detailed embodiment of the invention is described in Chapter II with reference to the figures. In Chapter III, variants of this embodiment are presented. Finally, the advantages of the various embodiments are discussed in Section IV.

### Chapter I: Definitions, terminology and conventions :

In the figures, the same references are used to designate the same elements.

In the remainder of this description, features and functions well known to the person skilled in the art are not described in detail.

The figures are oriented with respect to an orthogonal XYZ coordinate system, where the X and Y directions are horizontal and the Z direction is vertical. The Y direction is the longitudinal direction while the X direction is a transverse direction. Terms such as "above", "below", "top", "bottom", "upper", "lower" are defined in relation to the Z direction. Term such as "front", "rear" are defined in relation to Y direction.

An electrically conductive material is one whose electrical conductivity at 20°C is greater than 10⁴ S/m or 10⁶ S/m.

An electrically insulating material is one whose electrical conductivity at 20°C is less than 10⁻¹⁰ S/m or 10⁻¹⁴ S/m.

The expression "an element made of material A" or "an A element" means that material A represents 90% or 95% of the mass of the element.

High-intensity current refers to a direct current whose intensity is greater than 50 A and, more often, greater than 100 A or 500 A.

Conversely, a low-intensity current is one whose intensity is less than 1 A and, typically, less than 100 mA or 50 mA.

### Chapter II: Detailed embodiment

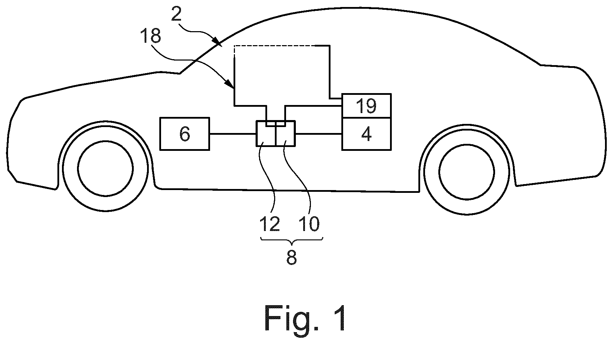

Figure 1 shows a vehicle 2, such as an electric or hybrid vehicle. Vehicle 2 is equipped with several electrical equipments that are supplied with high-intensity current. To simplify Fig. 1, only two such electrical equipments are shown, that is a battery 4 which is used to power an electric traction motor of vehicle 2 and another on-board power equipment 6 powered by battery 4. Equipment 6 is electrically connected to battery 4 via a connector assembly 8.

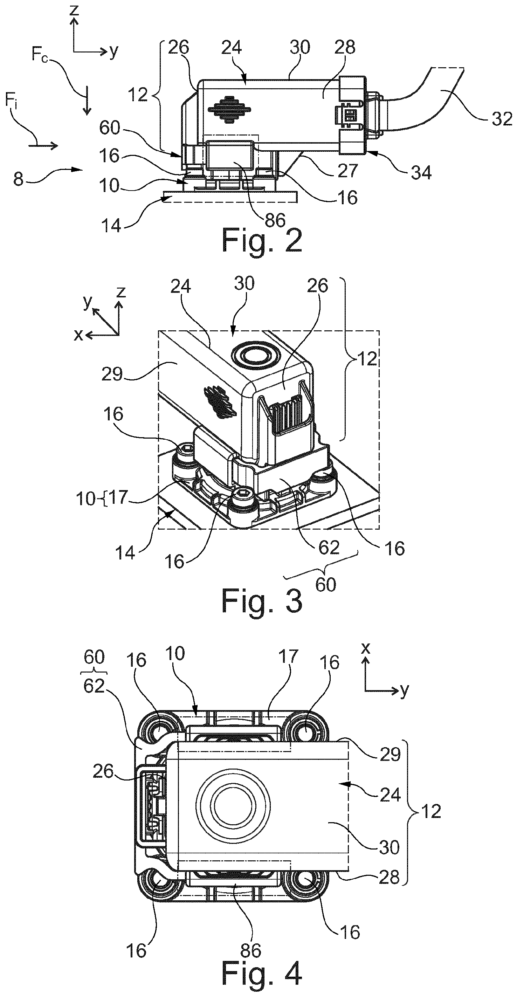

Connector assembly 8 enables equipment 6 to be alternately connected to and disconnected from battery 4. To this end, connector assembly 8 comprises a header connector 10 and a connector 12. Header connector 10 and connector 12 are reversibly movable relative to each other between a connected state and a disconnected state. In the connected state, header connector 10 and connector 12 are mechanically and electrically connected to each other to electrically connect equipment 6 to battery 4. In the disconnected state, the electrical connection between header connector 10 and connector 12 is interrupted, so that equipment 6 is no longer electrically connected to battery 4. Typically, header connector 10 is fixed without any degree of freedom inside vehicle 2, and it is connector 12 that is moved. Here, for example, header connector 10 is fastened to a lower plate 14 (Figs. 2, 3) attached to the chassis of vehicle 2 by means of nuts 16 (Figs. 2, 3, 4). For this purpose, header connector 10 has a frame 17 (Fig. 3, 4) made of electrically insulating material such as plastic. Frame 17 has holes for studs, to the upper ends of which the nuts 16 are screwed.

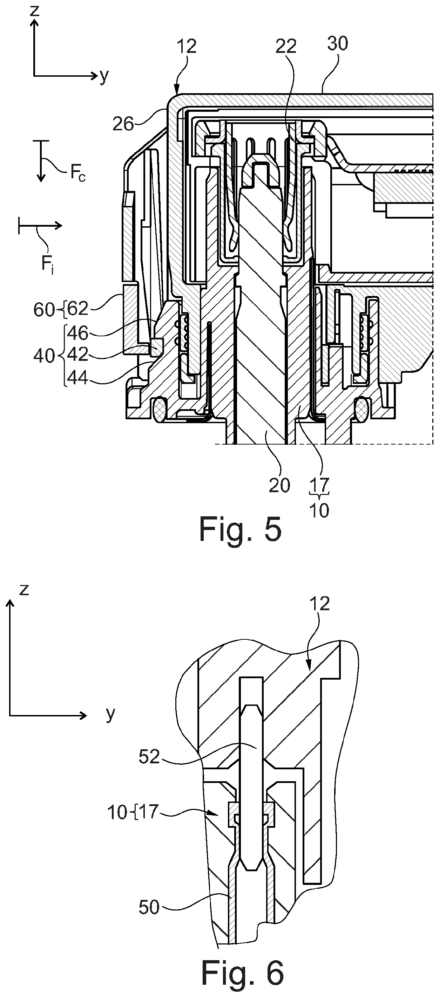

To change from the disconnected state to the connected state, connector 12 is moved in a connection direction Fc (Fig. 2, 5). Here, Fc direction is vertical and runs from top to bottom.

Vehicle 2 also comprises a High Voltage Interlock Loop (HVIL) 18 which, among other things, detects the movement of connector assembly 8 from its connected state to its disconnected state. In Figure 1, part of loop 18 is shown as a dashed line, to illustrate that loop 18 also passes through other equipments and connector assemblies not shown. The electrical continuity of loop 18 is monitored by a controller 19. Typically, a low-intensity current flows through loop 18. When controller 19 detects the interruption of this low-intensity current, it means that there is an anomaly, such as the accidental displacement of connector assembly 8 towards its disconnected state.

Figures 2 to 10 show in greater detail an embodiment of connector assembly 8.

Header connector 10 has electrical terminals 20 (Fig. 5) designed to engage with corresponding electrical terminals 22 (Fig. 5) on connector 12 to establish electrical continuity between equipment 6 and battery 4. Terminals 20, 22 are made of electrically conductive material. Terminals 20 and 22 extend mainly parallel to direction Fc to mate with each other when connector 12 is moved along insertion direction Fc. Terminals 20 are housed within frame 17.

Connector 12 also comprises a housing 24 (Fig. 2, 3, 4) inside which terminals 22 are housed. Housing 24 electrically isolates terminals 20 and 22 from the external environment when connector assembly 8 is in the connected state. To this end, housing 24 is made of an electrically insulating material such as plastic. More specifically, housing 24 comprises a front wall 26 (Fig. 2, 3, 4), a rear wall 27 (Fig. 2) and two side walls 28, 29 (Fig. 2, 3, 4). The walls 28, 29 each extend, on a respective side of connector 12, from front wall 26 to rear wall 27. In this embodiment, walls 26 and 28, 29 extend mainly vertically. Rear wall 27 is located on the opposite side to front wall 26. Rear wall 27 accommodates a cable 32 (Fig. 2), the end of which passes through this rear wall to electrically connect electrical conductors of cable 32 to terminals 22. Typically, for this purpose, rear wall 27 has an opening through which the end of cable 32 passes, and a retainer 34 (Fig. 2) which locks this cable end inside connector 12. In this embodiment, the end of cable 32 enters connector 12 in a direction parallel to the Y direction.

Walls 26 to 29 completely encircle terminals 20, 22 in the connected state. Housing 24 also has a top wall 30 (Fig. 2, 3, 4) which connects the upper edges of walls 26 to 29. Here, for example, top wall 30 extends mainly horizontally.

Connector assembly 8 comprises a front locking mechanism 40 (Fig. 5) reversibly movable between a locked position and an unlocked position. In the locked position, mechanism 40 holds connector 12 and header connector 10 in the connected state. In the unlocked position, connector 12 and header connector 10 can be freely moved into the disconnected state. Movement from the locked position to the unlocked position is typically performed manually by a user. To this end, mechanism 40 is a snap-in mechanism comprising a front stop 42 (Fig. 5) in front wall 26 of connector 12 and a front hook 44 (Fig. 5) in header connector 10.

In the locked position, when connector 12 is pulled upwards, front stop 42 comes to rest on a corresponding horizontal bearing face of hook 44. As a result, connector 12 remains fixed to header connector 10 and cannot be moved to the disconnected state.

Here, hook 44 has a bearing face 46 (Fig. 5) facing away from connector assembly 8. Bearing face 46 can be depressed by a user's finger to move hook 44 rearward, by elastic deformation, and thus disengage hook 44 from front stop 42 to place mechanism 40 in its unlocked position. When hook 44 is tilted backwards, connector 12 can be freely removed from header connector 10.

In this embodiment, loop 18 passes through header connector 10 and connector 12 to detect the connected state and disconnected state of connector assembly 8. To this end, header connector 10 and connector 12 each comprise terminals that allow the loop 18 to pass from header connector 10 to connector 12 only when the assembly connector 8 is in its connected state. In this example, header connector 10 has two electrical conductive electrodes 50 (Fig. 6) and connector 12 has two electrical terminals 52 (Fig. 6). Each terminal 52 can be plugged into one of the corresponding electrodes 50 on header connector 10 to ensure electrical continuity between the electrodes 50 and the terminals 52. Figure 6 shows only one terminal 52 plugged into an electrode 50. The other terminal 52 and the other electrode 50 are identical, for example. Here, to limit the footprint of connector assembly 8, at least one electrode 50/terminal 52 pair is closer to the rear face 27 than to the front face 26. Electrodes 50 are electrically connected to respective ends of loop 18. Connector 12 also comprises an electrical conductor, not shown, which directly electrically connects the two terminals 52 of connector 12 to each other. Thus, when connector assembly 8 is in the connected state, electrical continuity between the two electrodes 50 is ensured via terminals 52 and the electrical conductor. Conversely, when connector assembly 8 is in its disconnected state, terminals 52 are no longer in mechanical and electrical contact with the corresponding electrodes 50. In this case, the electrical continuity of loop 18 is interrupted, enabling controller 19 to detect an anomaly.

To prevent accidental movement of mechanism 40 to its unlocked position, connector assembly 8 also comprises a connector position assurance device 60. The connector position assurance device 60 is better known by the acronym CPA ("Connector Position Assurance"). Hereinafter, it is referred to as "CPA 60".

CPA 60 is manually and reversibly movable between a pull-back position and a pull-in position. In the pull-back position, the user can freely move the locking mechanism 40 to its unlocked position. To do this, in the pull-back position, CPA 60 frees access to the bearing face 46, so that the user can depress this bearing face 46 using his finger or a tool. Conversely, in the pull-in position, the CPA obstructs access to the bearing face 46, so that mechanism 40 cannot be moved manually to its unlocked position. To this end, in this embodiment, CPA 60 comprises a front plate 62 (Figs. 3, 4, 5, 7) which extends in a vertical plane perpendicular to the Y direction. In the pull-in position, as shown in Fig. 5, this plate 62 covers the bearing face 46 so that it is not accessible to a user's finger. Conversely, in the pull-back position, plate 62 is much further away from the bearing face 46 so as to leave an access passage to this bearing face 46 for a user's finger.

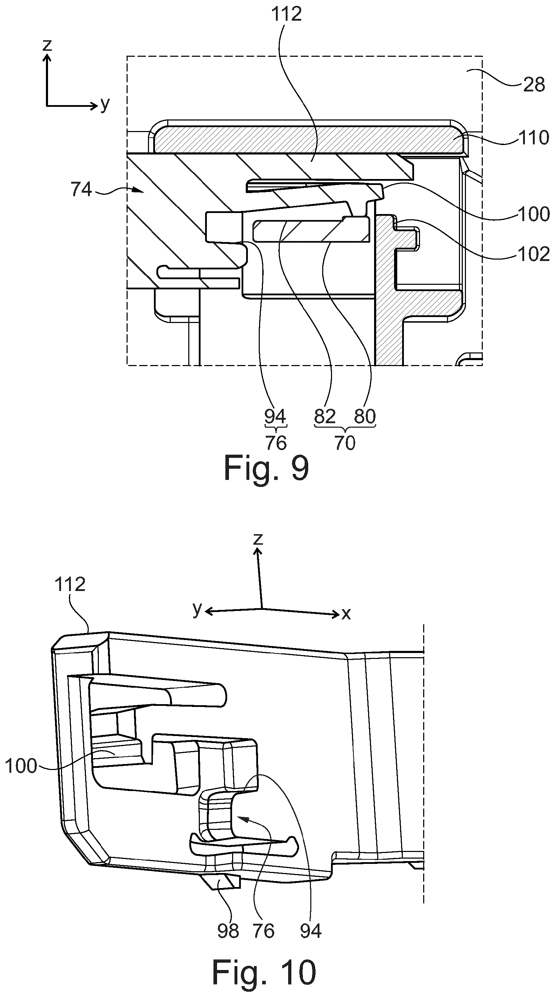

On all figures where it is visible, CPA 60 is shown in its pull-in position, except on figure 9 where it is shown in its pull-back position.

Here, CPA 60 slides horizontally between its pull-back position and pull-in position. Specifically, when CPA 60 is moved from its pull-back position to its pull-in position, the CPA advances in an insertion direction Fi (Fig. 2, 5, 7) parallel to and in the same direction as the Y direction. Furthermore, CPA 60 is permanently attached to connector 12 in both its pull-in position and pull-back position.

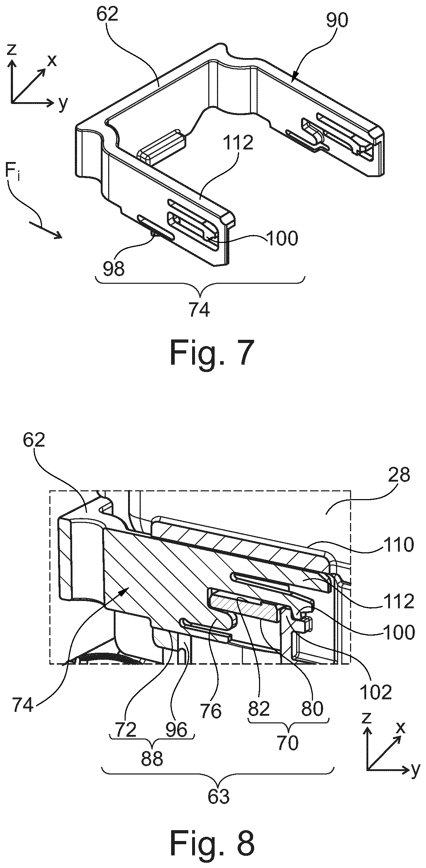

Here, mechanism 40 comprises only front stop 42 and front hook 44. Thus, no rear snap-in mechanism is provided near rear wall 27 to hold connector assembly 8 in its connected state. Indeed, cable 32 and also rear wall 27 would then impede access to such a rear snap-in mechanism so that it would be very difficult to move it manually. As a result, if a user pulls cable 32 upwards and in the absence of complementary latches, connector 12 pivots forward about an axis of rotation parallel to the X direction and located substantially at the foot of front wall 26. As already explained, such forward pivoting can cause problems, such as cutting the loop 18 and thus triggering the detection of an anomaly while the connector assembly 8 is still in its connected state. To prevent this, connector assembly 8 comprises two further side latches arranged along the connector's side walls 28 and 29 respectively. Here, these side latches are symmetrical to each other with respect to a vertical median plane of the connector 10 parallel to the Y and Z directions. Thus, in the following part of the description, only a side latch 63 (Fig. 8) located along wall 28 is described in detail.

When CPA 60 is in its pull-in position, latch 63 prevents the wall 28 from moving upwards, independently of the locking mechanism 40. Thus, when CPA 60 is in its pull-in position, connector 12 is held in place on header connector 10 by hook 44 and these side latches. In addition, since latch 63 is located along wall 28, it is located behind locking mechanism 40 in direction Fi. As a result, latch 63 also prevents connector 12 from pivoting forward if cable 32 is pulled upwards. Indeed, such forward pivoting of connector 12 is only possible if the side walls 28 and 29 can be raised when cable 32 is pulled upwards. However, the side latches prevent such movement of the side walls 28 and 29.

Here, to avoid complicating the use of connector assembly 8, the side latches are partly integrated into CPA 60.

Latche 63 comprises :
- a protuberance 70 (Fig. 8) formed from the same block of material as the frame 17 of header connector 10,
- a edge 72 (Fig. 8) in the side wall 28 of connector 12, and
- a lateral arm 74 (Fig. 8) integrated into CPA 60 and comprising a locking segment 76 (Fig. 8).

Here, protrusion 70 extends mainly in the Y direction. It has a lower bearing face 80 (Fig. 8, 9) and, on the opposite side, an upper bearing face 82 (Fig. 8, 9). The lower bearing face 80 is flat and extends in a horizontal plane.

The side wall 28 has a raised boss 86 (Figs. 2, 4) on its outer face. On the inside of connector 12, this boss delimits a cavity inside which the end of arm 74 is received. To enable the end of arm 74 to enter this cavity, boss 86 has an opening 88 (Fig. 8) through which arm 74 passes. Edge 72 corresponds to the lower edge of this opening 88. Arm 74 slides against edge 72 when CPA 60 is moved between its pull-back position and its pull-in position. Here, edge 72 is flat and extends in a horizontal plane. In the connected state, edge 72 is located at a lower altitude than protrusion 70, i.e. closer to plate 14 than protrusion 70.

Arm 74 extends mainly in the Fi direction from a respective end of the front plate 62. In Figure 7, the symmetrical arm of arm 74 bears the numerical reference 90.

Arm 74 is made from the same block of material as the front plate 62, so that CPA 60 forms a single part that can be produced simply by molding.

Blocking segment 76 is shaped :
- to be wedged between protrusion 70 and edge 72 when CPA 60 is in its pull-in position, and
- so as not to be wedged between protrusion 70 and edge 72 when CPA 60 is in its pull-back position.

When segment 76 is wedged between protrusion 70 and edge 72, it is not possible to move connector 12 upwards because segment 76 is locked against protrusion 70 and edge 72 is locked against arm 74.

Here, segment 76 extends mainly in the Y direction and has a flat, horizontal upper bearing face 94 (Figs. 9, 10) which bears directly against face 80 when CPA 60 is in its pull-in position. Conversely, in the pull-back position, as shown in Fig. 9, face 94 no longer rests on face 80, enabling connector 12 to be removed from header connector 10.

Here, the vertical inner periphery of the opening 88 also forms a stop 96 (Fig. 8), and arm 74 has a hook 98 (Fig. 7, 10) which comes to bear against this stop 96 when CPA 60 is in its pull-back position. Stop 96 and hook 98 are shaped so as to mechanically hold CPA 60 attached to connector 12 in the pull-back position.

Arm 74 also comprises a further hook 100 (Figs. 7, 8, 9, 10) which rests on a further stop 102 (Figs. 8, 9) formed in the wall 28 of connector 12, only when CPA 60 is in its pull-in position. Hook 100 and stop 102 are shaped to hold CPA 60 in its pull-in position as long as no sufficient force is exerted on CPA 60, by the user's hand, to move it to its pull-back position. For example, CPA 60 cannot be moved from its pull-in position to its pull-back position until a force greater than 1 N is exerted on it. Conversely, the force required by the user to move CPA 60 from its pull-in position to its pull-back position is typically less than 30 N or 10 N. To this end, the side of hook 100 that comes into contact with stop 102 is slightly inclined away from direction Fi. Thus, when the user pulls on the CPA in the opposite direction to the Fi direction, the hook 100 rises upwards by elastic deformation. Hook 100 then comes to rest on the upper face 82 of protuberance 70 as shown in Fig. 9. It is thus possible to move connector 12 upwards if mechanism 40 is also in its unlocked position. The upper face 82 is at the same altitude as the top of the stop 102. Thus, when CPA 60 is moved from its pull-back position to its pull-in position, the hook 100 slides first onto the upper face 82, then onto the top of the stop 102 before descending, by elastic deformation, when the pull-in position is reached and thus coming back to rest against stop 102.

The upper part of boss 86 forms a slide 110 (Figs. 8, 9) against which a guiding segment 112 (Figs. 7-10) of arm 74 slides. Slide 110 and segment 112 extend mainly in the Fi direction along the entire length of CPA 60's travel between its pull-back position and its pull-in position. In this way, segment 112 guides arm 74 in translation in direction Fi, by interacting with slide 110.

### Chapter III: Variants :

### Variants of latch 63 and arm 74 :

Numerous other designs are possible for protuberance 70. For example, as an alternative, protuberance 70 has the shape of a cylindrical stud of circular cross-section, whose axis of revolution is parallel to direction X. The face 94 of segment 76 bears directly against this stud only when the CPA is in the pull-in position.

CPA 60 can be attached to connector 12 in other ways. For example, hook 98 is arranged elsewhere than on arm 74. For example, hook 98 is not arranged on arm 74 but on an other arm extending horizontally from plate 62. In this case, stop 96 must also be correspondingly displaced. In a very simplified variant, hook 98 is omitted so that the CPA is mechanically detached from connector 12 in its pull-back position.

The snap-action mechanism which holds CPA 60 in its pull-in position can be designed differently. For example, hook 100 is not arranged in arm 74 but directly in plate 62. In this case, stop 102 must be moved accordingly. In a very simplified embodiment, hook 100 is omitted so that there is nothing to hold the CPA in its pull-in position.

Alternatively, slide 110 and guiding segment 112 are omitted.

Alternatively, the side wall 28 of connector 12 does not form a boss 86 within which the free end of arm 74 is received.

### Other variants :

Other designs for the locking mechanism 40 are also possible. For example, front hook 44 is arranged in the connector 12 and front stop 42 is arranged in header connector 10. In another embodiment, the locking mechanism comprises several front hooks and several front stops, all arranged in the front wall of connector 12 and on the front side of header connector 10.

Alternatively, electrodes 50 and terminals 52 are closer to front wall 26 than to rear wall 27, or halfway between the front and rear walls of connector 12.

In another embodiment, electrodes 50 and terminals 52 are omitted, so that the connected state of connector assembly 8 is not monitored using loop 18.

The end of cable 32 may also enter connector 12 in a direction other than perpendicular to the connection direction Fc. For example, the cable end enters the connector in a direction that is inclined to, but not perpendicular to, the connection direction Fc.

Up to now, we have described the particular case where cable 32 enters connector 12 via rear wall 27. Alternatively, cable 32 enters connector 12 through one of the side walls 28, 29 and not through rear wall 27. In another variant, cable 32 enters connector 12 via the top wall 30 and not via one of the walls 27 to 29.

Several of the variants described above can be combined in a single embodiment.

### Chapter IV: Advantages of the described embodiments :

The fact that, in the pull-in position, arm 74 locks the side walls 28, 29 of connector 12 relative to header connector 10 prevents the forward pivoting of connector 12 relative to header connector 10 when a force tending to rotate connector 12 forwards is applied to it.

Moreover, lateral locking of the side walls 28, 29 is simple to implement, since it is achieved by moving CPA 60 from its pull-back position to its pull-in position, as it is usually done. This means that activating side latch 63 requires no additional operation.

The fact that the side wall 28 of connector 12 covers protuberance 70 and locking segment 76 makes the locking of connector 12 in header connector 10 more resistant to lateral vibrations.

Finally, side latch 63 improves the robustness of connector assembly 8. Indeed, if locking mechanism 40 is damaged, for example as a result of mishandling, latch 63 still enables connector 12 and header connector 10 to remain in the connected state. Latch 63 therefore also provides redundancy for the locking mechanism 40.

The fact that protuberance 70 and locking segment 76 have respective flat bearing faces which bear directly against each other in the pull-in position enhances the robustness of latch 63.

Hook 100 makes it simple to hold CPA 60 in its pull-in position.

Hook 98 makes it simple to hold CPA 60 attached to connector 12 in its pull-back position.

Guiding segment 112 ensures precise positioning of the locking segment 76 with respect to protrusion 70 and edge 72.

Placing the terminals 52 closer to rear wall 27 than to front wall 26 limits the footprint of connector 12 by locating these terminals in a position not occupied by the locking mechanism 40.

## Claims

1. Connector assembly (8) comprising :
- a header connector (10) and a connector (12) reversibly movable, along a connection direction (Fc), from a disconnected state in which the electrical connection between the connector and the header connector is interrupted, to a connected state in which the header connector and the connector are mechanically and electrically connected to each other for electrically connecting electrical equipments to each other, the connector comprising for this purpose electrical terminals (22), a front wall (26), a rear wall (27) located on the opposite side to the front wall and two side walls (28, 29) each extending from the front wall to the rear wall so that these four walls encircle the electrical terminals,
- a locking mechanism (40) comprising a front stop (42) and a front hook (44) that can be moved by hand between a locked position in which the front hook engages the front stop to hold the header connector and connector in the connected state, and an unlocked position in which the front hook is not engaged with the front stop so that the header connector and connector can be freely moved into the disconnected state, one of the front stop and front hook being provided in the front wall of the connector,
- a CPA (Connector Position Assurance) (60) reversibly movable, along an insertion direction (Fi), between a pull-back position in which the front hook (44) can be manually moved to its unlocked position, and a pull-in position in which the front hook (44) cannot be manually moved to its unlocked position, the insertion direction (Fi) being directed from the front wall to the rear wall of the header connector,
**characterized in that** the connector assembly further comprises two side latches (63) arranged along respective side walls (28, 29) of the connector, each side latch comprising :
- a protuberance (70) arrange on the header connector (10),
- an edge (72) arranged on the side wall (28) of the connector, in the connected state this edge being located after the protuberance in the connection direction, and
- a side arm (74) provided in the CPA (60), this side arm being shaped :
- to be wedged between the protuberance (70) and the edge (72) when the CPA is in the pull-in position to lock the connector side wall relative to the header connector, and
- not to be wedged between the protuberance (70) and the edge (72) when the CPA is in the pull-back position to unlock the connector side wall relative to the header connector.

2. Connector assembly as claimed in claim 1, wherein the protuberance (70) and the side arm (74) each have respective bearing plane faces (80, 94) which lie directly against one another in the pull-in position, these bearing plane faces being perpendicular to the connection direction (Fc).

3. Connector assembly according to any of the preceding claims, wherein the protuberance (70) is located behind the locking mechanism (40) in the insertion direction (Fi).

4. Connector assembly according to any of the preceding claims, wherein :
- each side wall (28) of the connector comprises a first side stop (96), and
- each side arm comprises a first side hook (98) in abutment against one respective first side stop (96) in the pull-back position to retain the CPA (60) engaged within the connector.

5. Connector assembly according to any one of the preceding claims, wherein :
- each side wall (28) of the connector has a second side stop (102), and
- each side arm has a second side hook (100) in abutment against one respective second side stop in the pull-in position to hold the CPA (60) in the pull-in position.

6. Connector assembly according to any one of the preceding claims, wherein :
- each side wall (28) of the connector has a slide (110) which extends mainly parallel to the insertion direction (Fi) and is located above the protuberance (70) in the connection direction (Fc), and
- each arm has a guiding segment (112) able to slide against this slide (110) when the CPA is moved to its pull-in position, so as to guide the movement of this side arm along the side wall of the connector.

7. An assembly according to any of the preceding claims, wherein the connector and header connector each comprise terminals (50, 52) of a High Voltage Loop Interlock, these terminals being closer to the rear wall (27) of the connector than to the front wall (26) of the connector.

8. An assembly according to any one of the preceding claims, wherein the assembly comprises a cable (32) electrically connected to the connector terminals (52), the end of this cable entering inside the connector by passing through one wall chosen in the group composed of the rear wall (27) of this connector and one of the side wall (28, 29) of the connector.

9. An assembly according to any of the preceding claims, wherein each side wall (28, 29) of the connector has a through opening (88) shaped to receive a respective side arm (74) of the CPA in both pull-back position and pull-in position.

10. The assembly according to any of the preceding claims, wherein the insertion direction (Fi) is perpendicular to the connection direction (Fc).

11. A vehicle comprising
- at least two electrical equipments (4, 6) powered by current intensity of which is greater than 50 A,
- an assembly connector (8) comprising a header connector (10) and a connector (12) reversibly movable, along a connection direction, from a disconnected state in which the electrical connection between the connector and the header connector is interrupted, to a connected state in which the header connector and the connector are mechanically and electrically connected to each other for electrically connecting the two electrical equipments to each other,
**characterized in that** the assembly connector (8) is conform to anyone of the preceding claims.

12. The vehicle according to claim 11, wherein the vehicle comprises :
- an high-voltage loop interlock (18) to detect the disconnected state of the assembly connector, and
- the connector and header connector each comprises terminals (50, 52) of the High Voltage Loop Interlock.
